# Europäisches Patentamt
## European Patent Office
## Office européen des brevets

(11) Publication number: **0 148 006**
**B1**

(12) **EUROPEAN PATENT SPECIFICATION**

(45) Date of publication of patent specification: **18.05.88**

(51) Int. Cl.⁴: **C 09 D 11/02**

(21) Application number: **84308960.8**

(22) Date of filing: **20.12.84**

(54) **Ink for use in an ink wire dot printer.**

(30) Priority: **23.12.83 JP 243544/83**
**04.04.84 JP 67285/84**

(43) Date of publication of application:
**10.07.85 Bulletin 85/28**

(45) Publication of the grant of the patent:
**18.05.88 Bulletin 88/20**

(84) Designated Contracting States:
**DE FR GB IT NL**

(56) References cited:
**EP-A-0 097 009**
**DE-A-3 239 026**

(73) Proprietor: **SEIKO EPSON CORPORATION**
**4-1, Nishishinjuku 2-chome**
**Shinjuku-ku Tokyo-to (JP)**

(72) Inventor: **Matsuzaki, Makoto**
**80 Oaza-hirookaharashinden**
**Shiojiri-shi Nagano-ken (JP)**
Inventor: **Suzuki, Takashi**
**80 Oaza-hirookaharashinden**
**Shiojiri-shi Nagano-ken (JP)**
Inventor: **Matsuzawa, Masanao**
**80 Oaza-hirookaharashinden**
**Shiojiri-shi Nagano-ken (JP)**
Inventor: **Miyazawa, Yoshinori**
**80 Oaza-hirookaharashinden**
**Shiojiri-shi Nagano-ken (JP)**

(74) Representative: **Miller, Joseph et al**
**J. MILLER & CO. Lincoln House**
**296-302 High Holborn**
**London WC1V 7JH (GB)**

Courier Press, Leamington Spa, England.

## Description

This invention relates to an ink for use in an ink dot printer, e.g. a printer in which ink applied to the tip of the wire is brought into contact with a recording paper so that the ink is transferred to the paper to form a dot, thereby drawing characters, graphic forms and the like.

An ink for a wire dot printer is disclosed in Japanese Laid Open Specification No. 164173/1980 in which the ink comprises a solvent consisting mainly of water. However, when such an ink is left to stand for a long time, the water evaporates, the ink at the distal end of the wire becomes highly viscous, the fluidity of the ink consequently deteriorates, and the ink is unable to follow the movement of the wire and gradually deteriorates in the density required to form a continuous dot. Moreover, if the drying goes further, the ink hardens, the wire does not operate normally, and thus the printing cannot be attained at all.

In order to prevent the ink from drying in this way, the wire tip portion of the printer head may be covered when the printer is not in service as disclosed in Japanese Patent Laid-Open Specification No. 75874/1981. However, it is inconvenient to have to move the cover at the time of starting and stopping printing, the printer has to be made large, and drying still cannot be entirely prevented.

It has also been suggested to use a fatty acid or mineral oil in the ink as a solvent and wetting agent, but this makes the viscosity of the ink too high to stick uniformly on the wire tip, and hence a dot with uniform density cannot be formed.

A conventional wire dot printer uses an ink ribbon, but the life of the ink ribbon is short, feeding means must be provided for imparting feed motion to the ink ribbon and there is a difference in print density between the beginning and the end of the ink ribbon.

In order to avoid the use of an ink ribbon, it has been proposed in European Patent Application No. 83303218.8 (EP—A—0.097.009), to lead ink from an ink tank to the wire tip by way of an impregnation member, capillary tubing, a pump and the like. Moreover, it has been suggested that such a printer should use an aqueous ink constituted principally by a polyhydric alcohol wetting agent and water.

However, the head of an ink wire dot printer is open in structure, and it is very difficult to provide a closed structure for the prevention of ink drying. Consequently, if the head is left unused for a long period of time, defective printing may result at the beginning of the printing from the clogging of the ink in the impregnation member due to a change in the viscosity of the ink on the evaporation of its water content. Moreover, high density ink may come out when printing starts due to the viscous or hardened ink remaining on the wire tip, while the ink does not necessarily permeate the paper surface immediately and so remains thereon after printing because its surface tension is too high, whereby the paper surface becomes stained.

According, therefore, to the present invention, there is provided a non-water-based ink for use in an ink wire dot printer comprising a dyestuff; at least one polyhydric alcohol or a derivative thereof; and a water-soluble amine.

The dyestuff may be a water-soluble dyestuff or may be an oleaginous dyestuff soluble in a polar solvent.

The ink preferably has a viscosity of 0.02 to 0.07 PaS (20 to 70 centipoise) at 20°C, a surface tension of 0.035 to 0.05 N/m (35 to 50 dyn.cm), and a pH of 8 to 11 in a 20% aqueous solution.

The amine may have a freezing point of 21°C or below, a boiling point of 200°C or above, and a vapour pressure of 0.01 mmHg or below.

At least one said polyhydric alcohol or derivative thereof may have a boiling point of 200°C or above, a vapour pressure of 0.01 mmHg or below at 20°C, and a viscosity of 0.05 PaS (50 centipoise) or above at 20°C.

The ink may comprise a liquid component which is soluble in the polyhydric alcohol or derivative, the said liquid component having boiling point of 120°C or above, a freezing point of 0°C or below, a vapour pressure of 6 mm Hg of below at 20°C, and a viscosity of 0.05 PaS (50 centipoise) or below at 20°C.

The invention also comprises the use of the said ink in an ink wire dot printer.

Additionally, the invention comprises a method of printing in which ink is transferred to an end of a wire dot printer characterised in that the ink is a non-water-based ink comprising a dyestuff; at least one polyhydric alcohol or a derivative thereof; and a water-soluble amine.

Such an ink may contain a polyhydric alcohol or an ether thereof.

The invention is illustrated, merely by way of example, in the accompanying drawings, in which:-

Figure 1 is an exploded perspective view of the head of an ink wire dot printer in which the ink according to this invention may be used;

Figure 2 is a sectional view of the ink dot printer of Figure 1; and

Figure 3 is a perspective view of an ink feeding guide and a wire guide forming part of the structure shown in Figure 2.

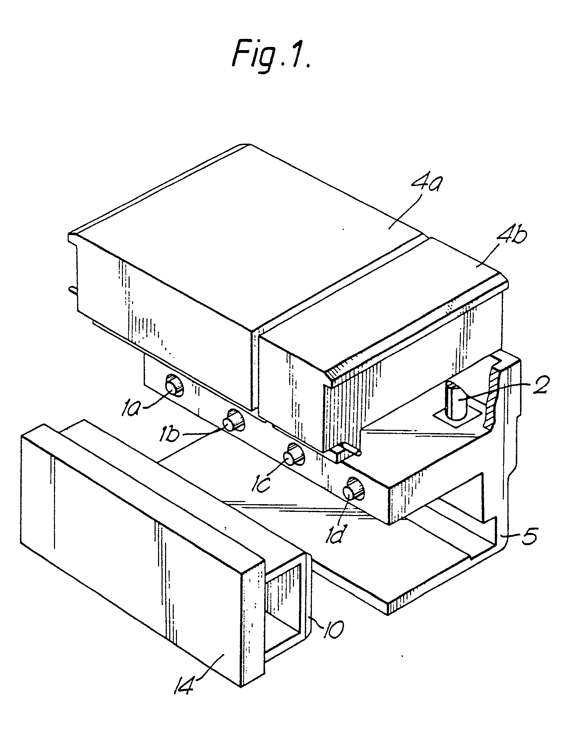

A head of an ink wire dot printer is shown in Figure 1 which forms part of a four colour printer plotter and is provided with black, red, green and blue ink systems each of which has a corresponding wire.

In such a four-colour printer plotter, the head and/or the recording paper (not shown) will be moved, and a wire corresponding to a desired colour is forced against the recording paper at a predetermined spot to form a dot, thereby drawing characters and graphic forms.

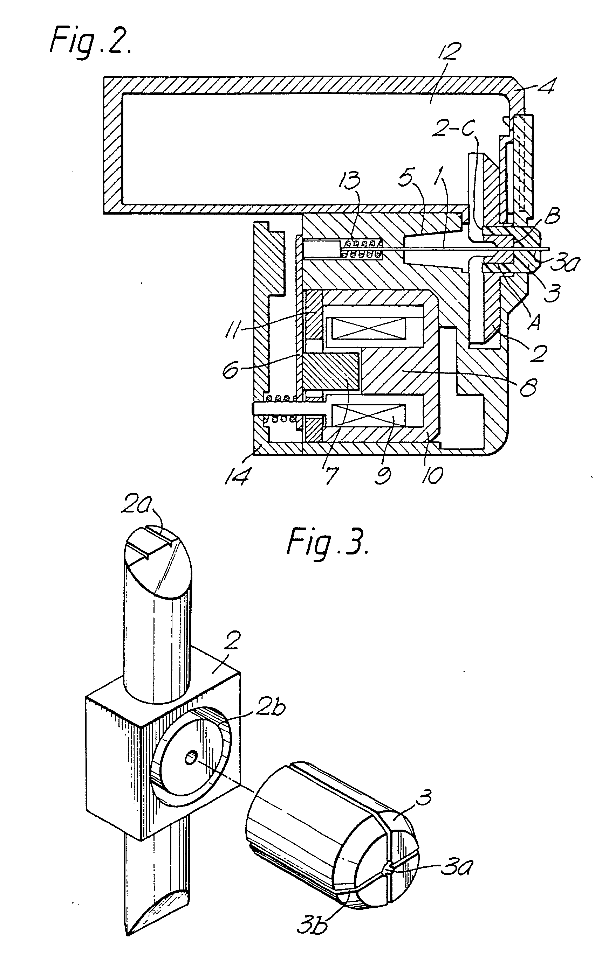

As shown in Figure 1, an ink tank 4 is detachably mounted on an upper part of the head. The ink tank 4 has a body 5 and has a dual structure comprising an ink tank 4—b (Figure 1) for black ink and a separate ink tank 4—a (Figure 1) which is divided into three compartments for inks of different colours. Each ink tank has a tank filler 12 (Figure 2) consisting of a porous material. An ink feeding guide 2 has ink guide grooves 2a (Figure 3) extending axially, and the ink guide grooves 2a abut the tank filler 12. The width and depth of the ink guide grooves 2a are set to a proper value such that ink can be fed stably from the ink tank 12. A circumferential groove 2b is provided in front of the ink feeding guide 2 and communicates with the ink guide grooves 2a in an internal part 2c. A wire guide 3d is incorporated in the circumferential groove 2b and gaps A, B are provided between the parts 2, 3. Since the gap between a wire 1f and a wire guide hole 3a of the wire guide 3 is very small, ink is led to the tip of the wire 1 by capillary action from the ink tank 4 by way of the guide grooves 2a and the ink feeding guide 2 and by way of the gaps A, B. In the case of the four-colour printer plotter shown in Figure 1, four wires 1—a, 1—b, 1—c, and 1—d, are used which correspond to the four colours of ink.

A wire drive unit for each of the wires includes a magnetic cicuit composed of a yoke 10 having a coil core 8 around which a coil 9 is wound, a yoke plate 11, and a plunger 7. Movement of the plunger 7 is transmitted through a clapper 6 to the wire 1, the wire 1 being urged against the clapper 6 by a spring 13. The wire driver unit is covered by a cover 14 which limits the stroke of the clapper 6. In a standby position, the distal end portion of the wire 1 is located rearwardly of a distal end surface of the wire guide 3, and the length of the wire 1 is selected such that an ink meniscus formed in a front portion of the wire guide hole 3a covers the distal end of the wire.

In operation, when the coil 9 is energized, the plunger 7 opposite to the coil core 8 is attracted towards the latter. The clapper 6, to which the plunger 7 is secured, is thus turned so as to cause the wire 1 to be projected outwardly since the wire 1 engages the distal end of the clapper 6. The distal end of the wire 1 projects through the ink meniscus, carries ink thereon, and hits a sheet of print paper (not shown) to transfer the ink to the print paper. When the wire 1 is in the standby position, the distal end thereof is located inwardly of the distal end surface of the wire guide 3 so that an ink meniscus is formed in front of the distal end of the wire 1. Accordingly, ink is attached successively to the distal end of the wire 1 as the latter is projected and retracted. The transfer of ink to the distal end of the wire 1, and other details of an ink-wire dot matrix printing process are described in European Patent Application No. 83303218.8 (EPA—A—0,097,009) filed by the present applicants and will therefore not be described here in greater detail.

Any excessive ink on the distal end surface of the wire guide 3 is drawn under capillary attraction into cross-sectionally V-shaped collection grooves 3b provided in the front and side surfaces of the wire guide 3 and is returned to the ink feeding guide 2 without smearing the print paper.

Next, the composition of the ink used in the printer referred to above will be described. For each of the black, red, green and blue colours, the ink is constituted by a dyestuff, a solvent consisting of polyhydric alcohol or an ether derivative of polyhydric alcohol, and a wetting agent.

A direct dyestuff, an acidic dyestuff, edible colouring matter or the like are suitable for a water-soluble dyestuff which may be used in the ink of the present invention. Alternatively, the dyestuff may be soluble in a polar solvent and may be constituted by an oleaginous dyestuff.

For example the dyestuff may be Direct Deep Black XA (similar to C.I. Direct Black 38), Kayaku Direct Deep Black EX (similar to C.I. Direct Black 38), Kayaku Direct Fast Black (similar to C.I. Direct Black 51), Water Black L200 (similar to C.I. Direct Black 19), Direct Fast Black AB (similar to C.I. Direct Black 32), Direct Fast Black B (similar to C.I. Direct Black 22), Nigrosin (C.I. Acid Black 2), Suminol Milling Black 8 BX (similar to C.I. Direct Black 24), Kayanol Milling Black VLG (C.I. Acid Black 26), Suminol Milling Black NB (C.I. Acid Black 29), Aizen Opal Black WH (C.I. Acid Black 52), Water Black 187—L (C.I. Acid Black 154), Daiwa Black # 1000, Daiwa Black # 2000 (similar to C.I. Direct Black 154), Mitsui R—052 (manufactured by Mitsui Toatsu Chemicals), Aizen Opal Black WCH (C.I. Acid Black 52), Kayaku Direct Brilliant Yellow G (C.I. Direct Yellow 4), Aizen Primura Yellow 5GLH (C.I. Direct Yellow 26), Aizen Purimura Yellow GELH (C.I. Direct Yellow 44), Direct Fast Yellow (C.I. Direct Yellow 50), Fast Yellow (C.I. Acid Yellow 9), Mitsui Acid Fast Yellow G (C.I. Acid Yellow 17), Suminol Belling Yellow NR (C.I. Acid Yellow 1), Water Yellow # 1 (C.I. Acid Yellow 23), Suminol Fast Yellow R (C.I. Acid Yellow 25), Metanil Yellow (C.I. Acid Yellow 36), Water Yellow 6 (C.I. Acid Yellow 42), Daiwa Yellow # 330H (manufactured by Daiwa Chemical Industry), Daiwa Yellow # 300 (similar to C.I. Acid Yellow 79), Sunset Yellow (C.I. Food Yellow 3), Sumitomo SI (Yellow IA (manufactured by Sumitomo Chemical) Sumitomo S.I. Y—10A Direct Yellow 50 (C.I. Direct Yellow 50), Direct Yellow 86 (C.I. Direct Yellow 86), Kayaku Direct Scarlet B (C.I. Direct Red 37), Aizen Direct Fast Red FH (C.I. Direct Red 1), Aizen Purimura Scarlet GSH (C.I. Direct Red 4), Aizen Direct Low Dulling Red BH (C.I. Direct Red 31), Aizen Purimura Red 4BH (C.I. Direct Red 81), Direct Fast Scarlet 4BS (C.I. Direct Red 23), Kayaku Direct Scarlet 3B (C.I. Direct Red 39), Aizen Purimura Pink 2BLH (C.I. Direct Red 75), Suminol Fast Red GG (C.I. Acid Orange 19), Naphthol Orange (C.I. Acid Orange 20), Suminol Milling Orange R (C.I. Acid Orange 45), Water Orange # 18 (C.I. Acid Orange 56), Solar Red RB (C.I. Acid Red 7), Solar Rubin (C.I. Acid Red 14), New Cocusine (C.I. Acid Red 18), Acid Rhodamine G (C.I. Acid Red 50), Erythrocin (C.I. Acid Red 51), Kayaku Acid Rhodamine FB (C.I. Acid Red 52), Water Red # 2 (C.I. Acid Red 87), Water Pink # 2 (C.I. Acid Red 92), Aizen Rose Bengal (C.I. Acid Red 94), Suminol Brilliant Scarlet DH (C.I. Acid Red 97), Mitsui Acid Violet 6BN (C.I. Acid Violet 15), Mitsui Acid Violet BN (C.I. Acid Violet 17), Water Red 1, 2, 3, 5, 9 (manufactured by Orient Chemicals), KST Red 008, KST Red 009, Acid Red 254, KST Red FBSP KST Red I—143 (similar to C.I. Acid Red 254), Daiwa Red M81 (Daiwa Chemical Industry), Sumitomo S.I.R.—3A, Sumitomo S.I. R—10A, Sumitomo J.I.M.—1,2, 10 (similar to C.I. Acid 254), Amaranth (C.I. Food Red 9), Kayaku Direct Sky Blue 6B (C.I. Direct Blue 1), Aizen Direct Blue 5BH (C.I. Direct Blue 15), Mitsui Direct Blue 2BN (C.I. Direct Blue 6), Kayarasu Supura Turquoise Blue FBL (C.I. Direct Blue (C.I. Direct Blue 199), Water Blue # 3 (C.I. Direct Blue 86), Kayarasu Blue G conc. (C.I. Direct Blue 78), Kadyarasupura Blue FF2GL (C.I. Direct Blue 106), Patent Blue V (C.I. Acid Blue 1), Patent Blue AF (C.I. Acid Blue 7), Water Blue # 9, (C.I. Acid Blue 9). Water Blue 116 (C.I. Acid Blue 15), Orient Soluble Blue OBC (C.I. Acid Blue 22), Mitsui Nylon Fast Blue G (C.I.Acid Blue 25), Suminol Fast Blue 3G (C.I. Acid Blue 27), Daiwa Indigo Carmine (C.I. Acid Blue 74), Water Blue # 115 (C.I. Acid Blue 90), Orient Soluble Blue OBB (C.I. Acid Blue 93), Water Blue 105, 105S (Orient Chemical), Daiwa Blue 300, 300B, 700 (Daiwa Chemical Industry), Tarcois I-M (Similar to C.I. Direct Blue 86), Water Blue 117, 188 (Orient Chemical), Sumitomo J, I.C-1, 2, 3, 4 (similar to C.I. Direct Blue 86), Daiwa Green # 70 (Daiwa Chemical Industry), Acid Brilliant Milling Green B (C.I. Acid Green 9), Food Green No. 2 (C.I. Food Green 2).

A single dyestuff or a mixture of dyestuff may be employed and the quantity used can vary according to the required printing density or printing medium. However, the dyestuff is preferably 2 to 20 percent by weight of the total quantity of ink.

Polyhydric alcohol and its derivative which are used for the invention not only act as a wetting agent and as a main solvent but also lower the vapour pressure of the ink, retard the evaporation and also function as an accelerator for dissolution of the dyestuff. As solvent there may be present a first liquid component being a polyhydric alcohol or its derivative having a boiling point of 200°C or over, a freezing point of 20°C or below, a vapour pressure of 0.01 mmHg or below at 20°C and a viscosity of 0.05 PaS (50 centipoise) or over 20°C. The first liquid component may be used in combination with a second liquid component having a boiling point of 120°C or over, a freezing point of 0°C or below, a vapour pressure of 6 mmHg or below at 20°C, a viscosity of 0.05 PaS (50 centipoise) or below at 20°C. The second liquid component is preferably selected from among aliphatic polyhydric alcohols, alkylene derivatives of aliphatic polyhydric alcohols, alkyletheracetate derivatives of aliphatic polyhydric alcohols, and nitrogen-containing and/or oxygen containing heterocyclic compounds.

The polyhydric alcohol and its derivative may be ethylene glycol, diethylene glycol, triethylene glycol, polyethylene glycol, propylene glycol, glycerol or the like; the alkylether derivative of polyhydric alcohol may be ethylene glycol monomethyl ether, ethylene glycol monoethyl ether, ethylene glycol monobutyl ether, diethylene glycol monomethyl ether, diethylene glycol monoethylene ether, diethylene glycol monobutyl ether; diethylene glycol dimethyl ether, diethylene glycol methethyl ether, diethylene glycol diethyl ether, triethylene glycol monomethyl ether, triethylene glycol dimethyl ether, triethylene glycol ether, triethylene glycol monoethyl ether, tetraethylene glycol-monoethyl ether, tetraethylene glycol-dimethyl ether, glycerol-monomethyl ether, glyceryl ether or the like; the alkylether acetate derivative of polyhydric alcohol may be ethylene glycolmonomethyl ether acetate, ethylene glycol monoethyl ether acetate, diethylene glycol monoethyl ether acetate or the like. The nitrogen-containing heterocyclic compound may be 2-pyrrolidone, N-methyl-2-pyrrolidone or 1, 3-dimethylimidazolidinone; the oxygen containing heterocyclic compound may be 4-butyrolacotone or the like. The solvent can be used as a mixture of two or more of the components and preferably constitutes 80 percent by weight or over of the total quantity of the ink.

Further, the water-soluble amine used for ink of the present invention may have a freezing point of 21°C or below, a vapour pressure of 0.01 mmHg or below at 20°C and a boiling point 200°C or over. It may function equivalently to a solvent and may act to prevent corrosion, oxidation and the like of various kinds of wires constituted mainly of cobalt, nickel, iron and the like which come in contact with ink. For example, the amine may be diethanolamine, triethanolamine, tri (polyoxyethylene) amine derivatives of them, and the like. There may be a mixture of two or more such amines, and they may be used in a quantity of 3 to 10 precent by weight of the total quantity of the ink. The pH value of the ink can be adjusted to be within 8 to 11 in an 20% aqueous solution, To prevent mould from growing, anticorrosive and mould preventatives such as formalin, phenol, pentachlorophenol, sodium dehydroacetate, Hoxide LX-H (Hokko Chemical) and the like can be added in suitable small quantities.

The ink according to this invention is adjusted by selecting mixing and dissolving the ink composition described above. However, it needs to have its properties adjusted to 0.02 to 0.07 PaS (20 to 70 cp) in viscosity at 20°C, 0.035 to 0.05 N/m (35 to 50 dym/cm) in surface tension and 8 to 11 in pH in an 20% aqueous solution. If the viscosity falls below 0.02 PaS (20 cp) the ink will be fed smoothly to the wire tip at the start of printing to obtain a clear print, but as the printing is carried out continuously, the head temperature rises, the ink viscosity becomes low, the ink is fed excessively to the wire tip, and scattering or blotting of the ink may arise if the viscosity exceeds 0.07 PaS (70 cp), the ink feed to the wire will be inadequate when printing starts, a clear print is not consequently obtainable, and at low temperatures the viscosity becomes high, and consequently the ink feed may be stopped.

In regard to surface tension, on the other hand, since the composition comprises a solvent of low surface tension, ink of 0.035 N/m (35 dyn/cm) or below permeates paper too smoothly to keep the print from blotting after printing, and ink of 0.05 N/m (50 dyn/cm) or over may give a clear printing dot, but permeation on the paper is retarded so as to cause a blur or the like. Hence the surface tension must be kept within the range indicated above so as to satisfy both quick drying time (paper permeating time) after printing and circulating of the printing dot.

Further, if the pH is 8 or below, chemical corrosion, oxidation and the like will occur on the wire in contact with the ink for a long period of time.

The ink for use on ink wire dot printer of this invention which is obtained as above does not consist primarily of water and therefore it it not subject to the problem of a rise in viscosity and hardening due to drying. The use of the ink of the present invention obviates the need to provide a mechanical arrangement for the prevention of drying and the ink will dry quickly on the paper after printing, thus ensuring a smooth printing at all times from the beginning. Further, since a water-soluble solvent is used as the main solvent and the ink itself is hygroscopic, no problem will occur under environmental conditions of high humidity, and handling is facilitated accordingly.

Furthermore, it has been known hitherto to alkalify the pH of the ink so as to prevent the wire from chemical corrosion, and in the case of an ink wire dot printer ink constituted mainly by water, its pH has been so adjusted to make it soluble in water at 7 or over in pH by adding alkali metal salt or by limiting the dyestuff used. However, the alkali metal salt is inevitably educed by evaporation of water or the available dyestuff is limited. As a result, however, of using a water-soluble amine group solvent presenting alkalinity itself, insoluble matter is not educed, the ink pH is controlled for many dyestuffs, the dyestuff used is not restricted.

The invention is illustrated by the following Examples in which the term "parts" refers to "parts by weight".

## Example 1

| | |
|---|---|
| Triethylene glycol monomethylether | 40 parts |
| Polyethylene glycol (molecular weight 400) | 25 parts |
| Polyethylene glycol (molecular weight 200) | 20 parts |
| Tri (polyoxyethylene) amine (molecular weight 400) (hereinafter referred to as TEA-400 | 5 parts |
| Dyestuff | Remainder |

(The dyestuff employed may be any of the dyestuffs of the subsequent Examples).
Viscosity: 0.048 to 0.05 PaS (48 to 50 centipoise) (20°C)
Surface Tension: 0.044 to 0.045 N/m (44 to 45 dyn/cm (20°C)

A clear printing quality with moderate dot density was obtained from carrying out a printing on the ink wire dot printer described hereinbefore with ink of the above composition. After leaving the ink wire dot printer standing in a 70°C atmosphere for 300 hours, the viscosity of the ink around the wire scarcely rose, and a satisfactory printing quality was obtained immediately after the start of the printing.

Further, from effecting a printing after having left the ink standing in a 20°C room for three months, a rise in the ink viscosity was almost imperceptible and a satisfactory printing quality was also abtained immediately after the start of the printing.

In contrast, in the case of an aqueous ink composed, for example, of:

| | |
|---|---|
| Water | 62 parts |
| Triethylene glycol | 29 parts |
| Ethylene glycol | 6 parts |
| Dyestuff | Remainder |

Viscosity: 0.0042 PaS (4.2 centipoise) (20°C)
Surface tension: 0.052 to 0.053 N/m (52 to 53 dyn/cnm (20°C) if printing is effected after leaving the ink standing in a 20°C room for 24 hours, a satisfactory density is not obtained at the start of the printing, and after printing about 500 dots, the printing density becomes normal. The reason is that the water content of the ink evaporates when it is left standing, and thus its physical properties such as viscosity and surface tension are changed.

In the head construction illustrated in the drawings, the ink is exposed through the wire guide hole 3a of the wire guide 3 all the time. However, the ink solvent of the ink of the present invention comprises polyhydric alcohol of an ether derivative of polyhydric alcohol and contains no water, as described hereinbefore. Therefore the ink will not be dried despite such exposure of the ink. Accordingly, the use of a cover or the like for preventing the ink from drying is not particularly required, the structure of the printer plotter is simplified, and the printer plotter is easier to handle.

5

**0 148 006**

In the ink dot printer, it is necessary to retain a proper quantity of ink stably on the tip of the wire if a satisfactory printing quality is to be obtained. In the construction shown in the drawings, therefore, an ink passage is formed by the ink feeding guide 2 and the wire guide 3 through grooves provided thereon and gaps between them, thereby securing an ink retaining function.

In contrast, such ink as will be prevented from drying by using the above-described fatty acid or mineral oil as the solvent and wetting agent has too high a viscosity (namely 0.5 to 1.0 PaS, i.e. 500 to 1,000 centipoise).

In the printer shown in the drawings, since the ink solvent comprises polyhydric alcohol or an ether derivative of polydhydric alcohol and the ink viscosity is relatively low, the control of ink flow is enhanced within the ink passage, and thus the ink can be fed more stably.

Furthermore, in the printer plotter shown in the drawings, the dot density on the recording paper must be high, and the recording paper is reversed for rotation. It is therefore necessary that the ink permeate the recording paper in good condition and that it should dry quickly with little tendency to blot. The ink used in the present invention, however, comprises a solvent and wetting agent consisting of polyhydric alcohol, or an ether derivative of polyhydric alcohol, is capable of wetting the recording paper and is also hydrophilic, and consequently it permeates the recording paper quickly to satisfy the above conditions, thus obtaining a satisfactory printing quality.

As will be appreciated, however, the present invention is not necessarily limited to the ink being used in an ink wire dot printer having a head structure as shown in the drawings, and hence it can be used in any ink dot printer in which a liquid ink is applied to a printing end surface of the wire by being passed through gaps between the wire and wire guide hole.

Example 2

| | |
|---|---|
| C.I. Acid Black 52 | 6.0 parts |
| Polyethylene glycol (# 400) | 35.0 parts |
| Polyethylene glycol (# 200) | 20.0 parts |
| Diethylene glycol monomethylether | 34.0 parts |
| Triethanolamine | 5.0 parts |

The above components are mixed with each other, and after heating and stirring the mixture at 70 to 80°C for six hours, any impurity is removed therefrom by passing the ink through a 5μm Teflon filter, thus obtaining a black ink having a viscosity of 0.0619 PaS (61.9 cp), a surface tension of 0.0442 N/m (44.2 dyn/cm), and a pH of 8.5 (20% aqueous solution).

Example 3

| | |
|---|---|
| C.I. Direct Black 154 | 5.0 parts |
| Polyethylene glycol (# 400) | 25.0 parts |
| Polyethylene glycol (# 200) | 20.0 parts |
| Diethylene glycol monomethylether | 45.0 parts |
| TEA-400 | 5.0 parts |

The above components are mixed with each other, and after heating and stirring the mixture at 70 to 80°C for six hours, it is filtered through a 5μm Teflon filter to obtain a black ink having a viscosity of 0.0471 PaS (47.1 cp), a surface tension of 0.0443 N/m (44.3 dyn/cm), and a pH of 10.5. (20% aqueous solution).

6

### Example 4

| | |
|---|---|
| C.I. Acid Red 254 | 3.6 parts |
| C.I. Direct Yellow 79 | 3.0 parts |
| Polyethylene glycol (# 300) | 25.0 parts |
| Polyethylene glycol (# 200) | 20.0 parts |
| Triethylene glycol monomethylether | 43.4 parts |
| TEA-400 | 5.0 parts |

The above components are mixed with each other, and after heating and stirring the mixture at 70 to 80°C for six hours, any impurity is removed therefrom by passing the ink through a 5μm Teflon filter, thus obtaining a red ink having a viscosity of 0.0443 PaS (44.3 cp), a surface tension of 0.0441 N/m (44.1 dyn/cm), and a pH of 8.5 in pH (10°C aqueous solution).

### Example 5

| | |
|---|---|
| Dyestuff similar to C.I.Direct Blue 86 | 3.6 parts |
| C.I. Direct Yellow 79 | 3.0 parts |
| Polyethylene glycol (# 300) | 30.0 parts |
| Polyethylene glycol (# 200) | 20.0 parts |
| Triethylene glycol monomethylether | 38.4 parts |
| TEA-400 | 5.0 parts |

The above components are mixed with each other, and after heating and stirring the mixture at 70 to 80°C for six hours, any impurity is removed therefrom by passing the ink through a 5μm Teflon filter, thus obtaining a green ink having a viscosity of 0.0523 PaS (52.3 cp), a surface tension of 0.0438 N/m (43.8 dyn/cm) and a pH of 8.3 (10% aqueous solution).

### Example 6

| | |
|---|---|
| C.I. Acid Blue 9 | 6.0 parts |
| Polyethylene glycol (# 400) | 25.0 parts |
| Polyethylene glycol (# 200) | 20.0 parts |
| Triethylene glycol monomethylether | 22.0 parts |
| Diethylene glycol monomethylether | 22.0 parts |
| TEA-400 | 5.0 parts |

The above components are mixed with each other, and after heating and stirring the mixture at 70 to 80°C for six hours, any impurity is removed therefrom by passing the ink through a 5μm Teflon filter, thus obtaining a blue ink having a viscosity of 0.045 PaS Teflon filter, thus obtaining a blue of 0.0443 N/m (44.3 dyn/cm) and a pH of 8.2 in pH (20% aqueous solution).

**0 148 006**

Example 7

| Dyestuff similar to C.I. Direct Blue 86 | 6.0 parts |
|---|---|
| Polyethylene glycol (# 300) | 25.0 parts |
| Polyethylene glycol (# 200) | 20.0 parts |
| Triethylene glycol monomethylether | 44.0 parts |
| TEA-400 | 5.0 parts |

The above components are mixed with each other, and after heating and stirring the mixture at 70 to 80°C for six hours, any impurity is removed therefrom by passing the ink through a 5μm Teflon filter, thus obtaining a cyanic ink having a viscosity of 0.0296 PaS (20.6 cp), a surface tension of 0.0436 N/m (43.6 dyn/cm) and a pH of 8.3 (20°C aqueous solution).

Example 8

| C.I. Acid Red 245 | 6.0 parts |
|---|---|
| Polyethylene glycol (# 300) | 25.0 parts |
| Polyethylene glycol (# 200) | 20.0 parts |
| Triethylene glycol monomethylether | 44.0 parts |
| TEA-400 | 5.0 parts |

The above components are mixed with each other, and after heating and stirring the mixture at 70 to 80°C for six hours, any impurity is removed therefrom by passing the ink through a 5μm Teflon filter, thus obtaining a Magenta ink having a viscosity of 0.0426 PaS (42.6 cp), a surface tension of 0.0431 N/m (43.1 dyn/cm), and a pH of 8.4 (20°C aqueous solution).

Example 9

| C.I. Direct Yellow 79 | 6.0 parts |
|---|---|
| Polyethylene glycol (#400) | 25.0 parts |
| Polyethylene glycol (#200) | 20.0 parts |
| Diethylene glycol monomethyl ether | 44.0 parts |
| TEA—400 | 5.0 parts |

The above components are mixed with each other, and after heating and stirring the mixture at 70 to 80°C for six hours, any impurity is removed therefrom by passing the ink through a 5 μm Teflon filter, thus obtaining a yellow ink having a viscosity of 0.0448 PaS (44.8 cp) a surface tension of 0.0441 N/m (44.1 dyn/cm), and a pH of 8.6 (20% aqueous solution).

Comparative Example 1

A comparative example was prepared having a composition similar to that of Example 2 except that instead of having 5 parts of triethanolamine it had 5 parts of polyethylene glycol (#400) and then black ink was blended therewith to obtain an ink having a viscosity of 0.0621 PaS (62.1 cp), a surface tension of 0.0441 N/m (44.1 dyn/cm), and a pH of 3.5 (20% aqueous solution).

Comparative Example 2

A comparative example was prepared having a composition similar to that of Example 2 except that instead of having 34.0 parts of diethylene glycol monomethyl ether it was provided with 14.0 parts thereof, 20.0 parts of water was added instead, and then black ink was blended therewith to obtain an ink having a viscosity of 0.0185 PaS (18.5 cp), a surface tension of 0.0496 N/m (49.6 dyn/cm), and a pH of 8.5.

The black ink of Comparative Examples 1 and 2 was constituted by the CI Acid Black 52 of Example 2.

8

Comparative Examples 3, 4, 5

Comparative Examples 3, 4, 5 were prepared having compositions respectively similar to those of Examples 4, 5, 6, except that instead of having 5.0 parts of TEA—400 they had 5.0 parts of polyethylene glycol (#400) instead to obtain red, green and blue inks respectively.

The inks of Examples 2 to 9 and Comparative Examples 1 to 5 were used in the ink wire dot head shown in the accompanying drawings using three kinds of wires constituted mainly by cobalt, nickel and iron respectively, and the inks were examined with respect to the initial printing, the state of the prints after they have been left to stand for a long time, the effect on the materials of the respective wires, the respective quality of printing, and so on. The results are as shown in the following table:

TABLE

| | Initial Print | Print after being left for a long time | Influence on the wire |
|---|---|---|---|
| Example 2 | O | O | O |
| Comparative example 1 | O | Δ | X |
| Comparative example 2 | X | X | O |
| Example 3 | O | O | O |
| Example 4 | O | O | O |
| Comparative example 3 | O | Δ | X |
| Example 5 | O | O | O |
| Comparative example 4 | O | Δ | X |
| Example 6 | O | O | O |
| Comparative example 5 | O | Δ | X |
| Example 7 | O | O | O |
| Example 8 | O | O | O |
| Example 9 | O | O | O |

O: Good
Δ Somewhat problematical
X: Not good

In the above table, each item was subjected to evaluation by employing the following criteria.

Initial print: Decided for quick drying property, scatter, dot circularity, and density on a printed test pattern (character, symbol) by means of visual observation and by means of a microscope.

Print after being left for a long time: The head was left in a 70°C thermostatic oven for 360 hours without providing a drying protector such as a cover or the like thereon, and was operated for reprinting thereafter. The picture quality was decided by visual observation as to whether or not printing was effected from an initial dot and also from a comparison of a printing pattern with an initial print.

Influence on wire: After the above print evaluation, the dot head using wires of three different materials was disassembled to check the state both of the wires in contact with the ink and that of the other parts to which the ink would adhere. The examination was effected both by visual observation and by means of a microscope. Thus the state of the wire surface (presence of solid deposits, discolouration, corrosion etc) was subjected to evaluation.

From the Table, it will be readily understood that a satisfactory result is obtainable from the inks of Examples 2 to 9 in respect of each of the items tabulated namely initial print, print after being left for a long time and influence on the wire. However, a satisfactory result is not obtainable from the inks of Comparative examples 1 to 5, particularly in relation to the print after being left for a long time.

Moreover, when the same tests of the inks of Examples 2 to 9 and Comparative examples 1 to 5 were carried out on the ink wire dot printers disclosed in Japanese Laid-Open Patent Specification No. 164173/1980, Japanese Patent Laid-Open Specification No. 6783/1982, Japanese Patent Laid-Open Specification No. 215370/1983 and also on wire dot printers disclosed in Japanese Utility Model Publication no. 2652/1978 and U.S. Patent No. 419846 wherein an impregnation member comes into contact direct with a wire, a satisfactory result was obtained from the inks of Examples 2 to 9, which weere all reliable, practicable and provided good printing quality. On the contrary, the inks of Comparative examples 1 to 5 were unsatisfactory for such use.

**Claims**

1. A non-water-based ink for use in an ink wire dot printer comprising a dyestuff; at least one polyhydric alcohol or a derivative thereof; and a water-soluble amine.

2. An ink as claimed in claim 1 in which the dyestuff is a water-soluble dyestuff or is an oleaginous dyestuff soluble in a polar solvent.

3. An ink as claimed in claim 1 or 2 in which the ink has a viscosity of 0.02 to 0.07 PaS (20 to 70 centipoise) at 20°C, a surface tension of 0.035 to 0.05 N/m (35 to 50 dyn/cm) and a pH of 8 to 11 in a 20% aqueous solution.

4. An ink as claimed in any preceding claim in which the amine has a freezing point of 21°C or below, a boiling point of 200°C or above, and a vapour pressure of 0.01 mmHg or below.

5. An ink as claimed in any preceding claim in which at least one said polyhydric alcohol or derivative thereof has a boiling point of 200°C or above, a freezing point of 20°C or below, a vapour pressure of 0.01 mmHg or below at 20°C and a viscosity of 0.05 PaS (50 centipoise) or above at 20°C.

6. An ink as claimed in any preceding claim in which the ink further contains a liquid component which is soluble in the polyhydric alcohol or derivative, the liquid component having a boiling point of 120°C or above, a freezing point of 0°C or below, a vapour pressure of 6 mmHg or below at 20°C and a viscosity of 0.05 PaS (50 centipoise) or below at 20°C.

7. An ink as claimed in any preceding claim characterised in that the ink as used in an ink wire dot printer.

8. A method of printing in which ink is transferred to the end of a wire of a wire dot printer characterised in that the ink is a non-water-based ink comprising a dyestuff; at least one polyhydric alcohol or a derivative thereof; and a water-soluble amine.

9. A method as claimed in claim 8 in wh ich the ink contains a polyhydric alcohol or an ether thereof.

**Patentansprüche**

1. Tinte, die nicht auf Basis von Wasser besteht, zur Verwendung in einem Nadelpunktdrucker, umfassend ein Bleichmittel, mindestens einen mehrwertigen Alkohol oder ein Derivat davon. un ein Wasser-lösliches Amin.

2. Tinte nach Anspruch 1, bei der das Bleichmittel ein Wasser-lösliches Bleichmittel oder ein ölartiges Bleichmittel, das in einem polaren Lösungsmittel löslich ist, ist.

3. Tinte nach Anspruch 1 oder 2, wobei die Tinte eine Viskosität von 0.02 bis 0.07 PaS (20 bis 70 Centipoise) bei 20°C, eine Oberflächenspannung von 0.035 bis 0.5 N/m (35 bis 50 dyn/cm) und einen pH von 8 bis 11 in einer 20% igen wässerigen Lösung aufweist.

4. Tinte nach einem der vorhergehenden Ansprüche, wobei das Amin einen Gefrierpunkt von 21°C oder darunter, einen Siedepunkt von 200°C oder darüber, und einen Dampfdruck von 0.01 mmHg oder darunter aufweist.

5. Tinte nach einem der vorhergehenden Ansprüche, wobei mindestens ein mehrwertiger Alkohol oder das Derivat davon einen Siedepunkt von 200°C oder darüber, einen Gefrierpunkt von 20°C oder darunter, einen Dampfdruck von 0.01 mmHg oder darunter bei 20°C und eine Viskosität von 0.05 PaS (50 Centipoise) oder darüber bei 20°C aufweist.

6. Tinte nach einem der vorhergehenden Ansprüche, wobei die Tinte zusätzlich eine flüssige Komponente enthält, die in dem mehrwertigen Alkohol oder dessen Derivat löslich ist, und einen Siedepunkt von 120°C oder darüber, einen Gefrierpunkt von 0°C oder darunter, einen Dampfdruck von 6 mmHg oder darunter bei 20°C und eine Viskosität von 0.05 PaS (50 Centipoise) oder darunter bei 20°C aufweist.

7. Tinte nach einem der vorhergehenden Ansprüche, dadruch gekennzeichnet, daß die Tinte in einem Nadelpunktdrucker verwendet wird.

8. Verfahren zum Drucken bei dem Tinte auf das Ende einer Nadel des Nadelpunktdruckers übertragen wird, dadurch gekennzeichnet, daß die Tinte nicht auf der Basis von Wasser besteht und ein Bleichmittel, mindestens einen mehrwertigen Alkohol oder ein Derivat davon und ein wasserlösliches Amin umfaßt.

9. Verfahren nach Anspruch 8, bei dem die Tinte einen mehrwertigen Alkohol oder einen Ether davon enthält.

**Revendications**

1. Une encre à base non aqueuse pour l'utilisation dans une imprimante à encre par points à aiguille comprenant; un colorant; au moins un polyalcool ou un de ses dérivés; et un amine soluble dans l'eau.

2. Une encre selon la revendication 1, dans laquelle le colorant est un colorant dans l'eau ou un colorant huileux soluble dans un solvant polaire.

3. Une encre selon la revendication 1 ou 2, dans laquelle l'encre a une viscosité de 0,02 à 0,07 Pa.s (20 à 70 centipoises) à 20°C, une tension superficielle de 0,035 à 0,05 N/m (35 à 50 dyn/cm) et pH de 8 à 11 en solution aqueuse à 20%.

4. Une encre selon l'une quelconque des revendications précédentes, caractérisée en ce que l'amine a un point de congélation de 21°C ou moins, un point d'ébullition de 200°C ou plus et une tension de vapeur de 0,01 mmHg ou moins.

5. Une encre selon l'une quelconque des revendications précédentes, dans laquelle l'un au moins desdits polyalcools de leurs dérivés a un point d'ébullition de 200°C ou plus, un point de congélation de 20°C ou moins, une tension de vapeur de 0,01 mmHg ou moins à 20°C et une viscosité de 0,05 Pa.s (50 centipoises) ou plus à 20°C.

6. Une encre selon l'une quelconque des revendications précédentes, dans laquelle l'encre contient en outre un composant liquide soluble dans le polyalcool ou son dérivé, le composant liquide ayant un point d'ébullition de 120°C ou plus, un point de congélation de 0°C ou moins, une tension de vapeur de 6 mmHg ou moins à 20°C et une viscosité de 0,05 Pa.s (50 centipoises) ou plus à 20°C.

7. Une encre selon l'une quelconque des revendications précédentes, caractérisée en ce que l'encre est utilisée dans une imprimante à encre par points à aiguille.

8. Procédé d'impression dans lequel l'encre est transférée à l'extrémité d'une aiguille d'une imprimante par points à aiguille, caractérisé en ce que l'encre est une encre à base non aqueuse comprenant: un colorant; au moins un polyalcool ou un de ses dérivés; et une amine soluble dans l'eau.

9. Un procédé selon la revendication 8, dans laquelle l'encre contient un polyalcool ou l'un des ses éthers.

# Fig.1.

4a

4b

1a

1b

1c

1d

2

5

10

14

Fig.2.

Fig.3.